# EUROPEAN PATENT SPECIFICATION

(11) **EP 1 589 895 B1**
(45) Date of publication and mention of the grant of the patent: **02.01.2008**
(21) Application number: 04706775.6
(22) Date of filing: 30.01.2004
(51) Int. Cl.: A61C 7/28, A61C 7/10

(54) **VERTICAL BUCCAL TUBES WITH MALLEABLE ARRESTING FLAPS**
VERTIKALE BUKKALRÖHREN MIT FORMBARENARRETIERKLAPPEN
TUBES BUCCAUX VERTICAUX A VOLETS D'ARRET MALLEABLES

(30) Priority: 06.02.2003 IT NA20030003; 09.04.2003 IT NA20030018
(43) Date of publication of application: 02.11.2005
(73) Proprietor: De Simone, Pasquale, 80014 Giugliano (IT)
(72) Inventor: De Simone, Pasquale, 80014 Giugliano (IT)
(86) International application number: PCT/IT2004/000029
(87) International publication number: WO 2004/069082

(56) References cited:
- DE-C- 525 429
- DE-C- 10 045 802
- US-A- 6 086 364

## Description

### TECHNICAL FIELD: ORTHODONTICS

The present invention generally relates to the field of Orthodontics.

### BACKGROUND ART OF THE INVENTION

Before of the Orthodontic Programmed PD System innovation, the previous status of the technique was based on the use of common orthodontic brackets and hinges, by vertical or horizontal insertion, to make any orthodontic arch removable from the orthodontic bands fixed on the teeth.

Then the previous technique was based on the use of Bi-Helix (lingual arch) and of Quad Helix (palatine arch), to control the transversal diameter of the dental arches.

Other kinds of orthodontic brackets by vertical insertion allow the insertion of any orthodontic device, but they are not compatible with the PD Arches.

The main disadvantages, in fact, caused by the use of common hinges and brackets are: the instability of the devices, that is sort of swinging, followed by an inconvenient disconnection of the orthodontic devices, the shape incompatibility of common devices by vertical disconnection with the Universal Vertical Hinge, element of this invention, and un-convenient activation to get the searched dental movement.

The document US-A-6086364 shows an orthodontic buccal tube to be fixed to a molar band.

### DISCLOSURE OF INVENTION

The PD System is a mechanical system made of unique and innovating orthodontic devices such as:
- PD Lingual Arches;
- PD Palatine Arches;
- Universal Vertical Hinge (UVH), that allows the vertical insertion of PD arches into the molar bands.

The PD lingual arch, the PD palatine arch and the Universal Vertical Hinge are also called Orthodontic Programmed PD System, since they represent the PD System mechanical element. It has been conceived and achieved for "the planned control of the orthodontic expansion" on the dental arches and, in particular, it aims to help the specialist in his profession, through a mechanical system in 4D (time included), compatible with therapeutic and biological individual needs.

The technical design of PD devices foresees:
- A mechanical combination system of different elements with the possibility of vertical insertion of the PD arches to the molar bands by the UVH.
- A searched molar movement by an aimed and planned movement, with a Set-up support about the teeth to be moved, and by the expansion movement on the model.
- The control on the inter-premolar and inter-molar diameter in short times.
- The control on the molars torque movement.

The main advantage is a convenient management of PD devices, which allows the specialist first the vertical insertion and disconnection of the PD arches into the molar bands, and this is made easy by the use of the UVH, soldered on said bands; and second the advantage of an extra-oral pre-activation of PD arches, planned by the specialist decision, achieved in laboratory by a Set-up support, in the respect of the anchorage principle and according to the therapeutic needs.

A detailed description of the PD different mechanical elements continues with the UVH description and with the PD Lingual and PD Palatine Arches description.

The UVH is a new kind of orthodontic hinge, made of malleable steel, which is soldered directly on the lingual surface of the orthodontic bands through the orthodontic welder.

The UVH holds all PD Lingual and PD Palatine Arches made from orthodontic steel wires with a 0,9 mm diameter; so its feature is to guarantee their block and to make them removable in a vertical way.

It is composed by: a ground body and two arresting flaps, which hold the devices.

The ground body has got a swelling in its centre, (see fig. 1 part 4; fig.2; fig.3.), necessary for the insertion of the final part of the PD arch, called vertical bayonet.

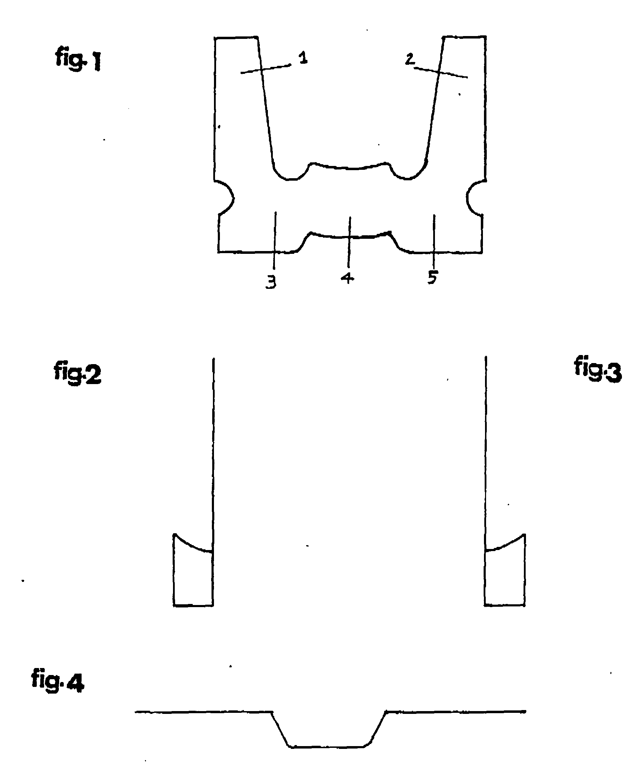

Instead, the two malleable arresting flaps, (see fig.1 part 1 and part 2) which hold the device, can be straightened and re-folded more times; in this way we will get a fixed orthodontic device that can be removed from the specialist in a vertical way.

This new kind of hinge is universal for two reasons: first, for its two arresting flaps, since it can be linked to the right-side molars and to the left-side molars of the same arch, so it is ambidextrous; second, it is universal because it can hold any PD lingual and PD palatine arch.

They are new kinds of orthodontic arches with particular shapes, that is with shutters and/or spirals, and all of them have a final part shape called vertical bayonet.

There are different models, symmetrical and unsymmetrical, according to the therapeutic individual needs and according to the control to be made on the searched transversal diameter.

The PD lingual arch symmetrical model with two spirals using back-incisor resin; the unsymmetrical model with a right spiral, with right working side and the opposite for the anchorage; the unsymmetrical model, with a left spiral, with left working side and the opposite for the anchorage; the PD palatine arch symmetrical model with four spirals using back incisor resin; the unsymmetrical model, with two right spirals, with right working side and the opposite for the anchorage; the unsymmetrical model, with two left spirals, with left working side and the opposite for the anchorage.

There is also the possibility to substitute the spirals with shutters, to guarantee a major stability as in the case of the PD supporting arch: a PD simple supporting arch, applicable to the upper and to the lower arch in combination with the UVH.

Other models of PD arches with shutters are: the PD lingual arch symmetrical model with two shutters using back-incisor resin; the unsymmetrical model, with a right shutter, with right working side and the opposite for the anchorage; the unsymmetrical model, with a left shutter, with left working side and the opposite for the anchorage.

The PD palatine arch symmetrical model, with four shutters using back-incisor resin; the unsymmetrical model, with two right shutters, with right working side and the opposite for the anchorage; the unsymmetrical model, with two left shutters, with left working side and the opposite for the anchorage.

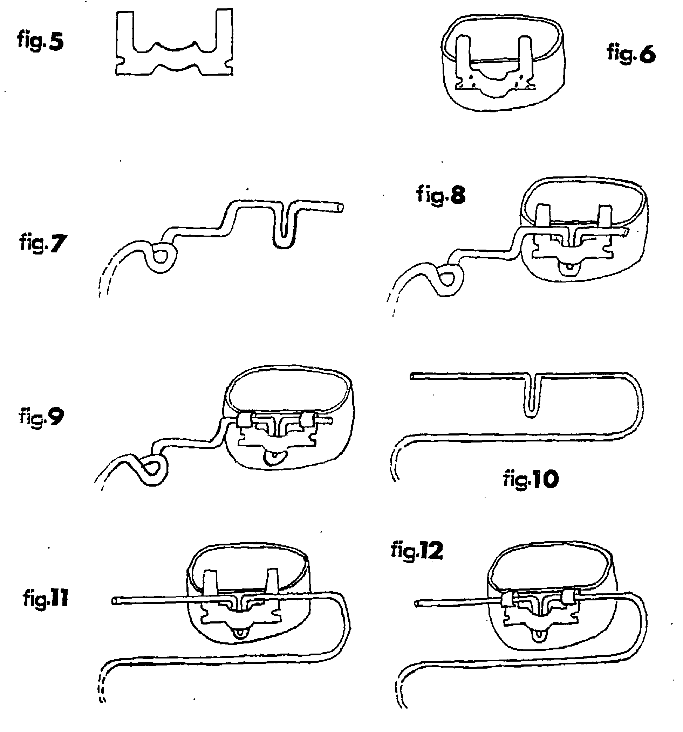

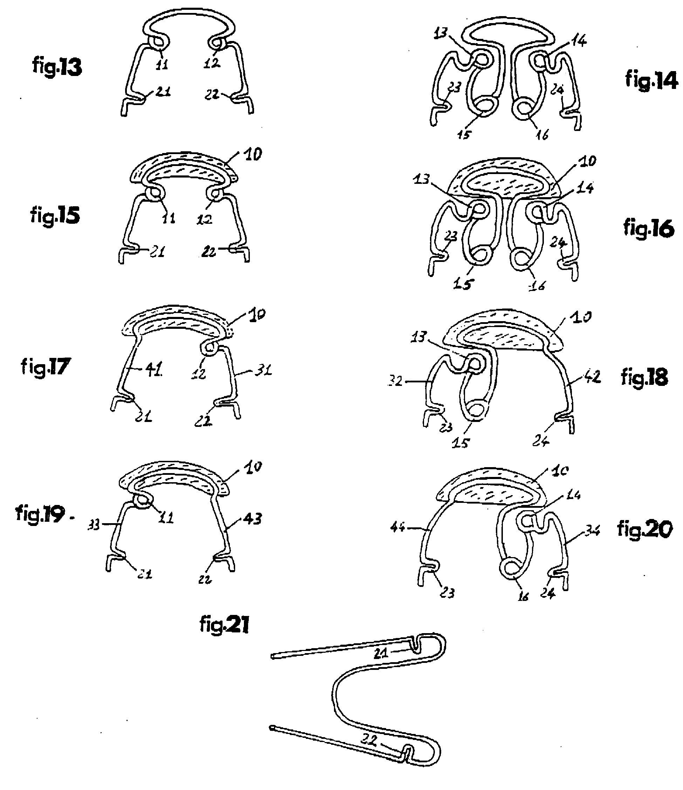

Finally all types of PD Arches have got a particular final part shape: a double folding of the wire, called vertical bayonet (see fig.7;10), which allow the arch to be inserted directly into the UVH (see fig.8;11), soldered on the molar bands (see fig.6).

### DESCRIPTION OF DRAWINGS

All PD System drawings arc contained in five sheets.

The **1/5** sheet includes 4 figures:
Fig.1: Universal Vertical Hinge - frontal sight;
   Part. 1: malleable arresting flap -
   Part. 2: malleable arresting flap-
   Part. 3 and Part. 5: ground body-
   Part. 4: central swelling-
Fig.2: Universal Vertical Hinge - first lateral side sight;
Fig.3: Universal Vertical Hinge - second lateral side sight;
Fig.4: Universal Vertical Hinge - ground sight.
   The **2/5** sheet includes 8 figures, showing the combination among different elements, such as UVH, PD lingual arch, PD palatine arch, PD supporting arch and a common molar band.
Fig.5: UVH;
Fig.6: UVH soldered on a common molar band;
Fig. 7: final part of PD lingual and PD palatine arch, called vertical bayonet;
Fig.8: vertical bayonet connected into the UVH swelling;
Fig.9: block of the arch, by folding the two arresting flaps;
Fig.10: final part of the PD supporting arch, called vertical bayonet;
Fig.11: vertical bayonet of the PD supporting arch, connected into the UVH swelling;
Fig. 12: block of the PD supporting arch, by folding the two arresting flaps.
   The **3/5** sheet includes 9 figures, showing the PD lingual and PD palatine arch and PD supporting arch.
Fig.13: PD lingual arch with spirals and without resin;
   Part. 11 and Part. 12: spirals -
   Part. 21 and Part. 22: vertical bayonets -
Fig.14: PD palatine arch with spirals and without resin;
   Part. 13, 14, 15, 16: spirals -
   Part. 23, 24: vertical bayonets -
Fig.15: PD lingual arch with spirals and with resin;
   Part. 10: resin -
   Part. 11, 12. spirals -
   Part. 21, 22: vertical bayonets -
Fig.16: PD palatine arch with spirals and with resin;
   Part. 10 resin -
   Part. 13, 14, 15, 16: spirals-
   Part. 23, 24: vertical bayonets -
Fig.17: Right unsymmetrical PD lingual arch;
   Part. 10: resin -
   Part.31: right working side -
   Part. 12: right spiral -
   Part. 41: opposite side for the anchorage -
   Part. 21, 22: vertical bayonets -
Fig.18: Right unsymmetrical PD palatine arch;
   Part. 10: resin -
   Part. 13, 15: right spirals -
   Part. 32: right working side -
   Part. 42: opposite side for the anchorage
   Part. 23, 24: vertical bayonets -
Fig.19: Left unsymmetrical PD lingual arch;
   Part. 10: resin -
   Part. 33: left working side -
   Part. 11: left spiral -
   Part. 43: opposite side for the anchorage -
   Part. 21, 22: vertical bayonets -
Fig.20: Left unsymmetrical PD palatine arch;
   Part. 10: resin -
   Part. 14, 16: left spirals -
   Part. 34: left working side -
   Part. 44: opposite side for the anchorage -
   Part. 23, 24: vertical bayonets -
Fig.21: PD supporting arch;
   Part. 21, 22: vertical bayonets -

   The **4/5** sheet includes 8 figures, showing PD lingual and PD palatine arch with shutters.

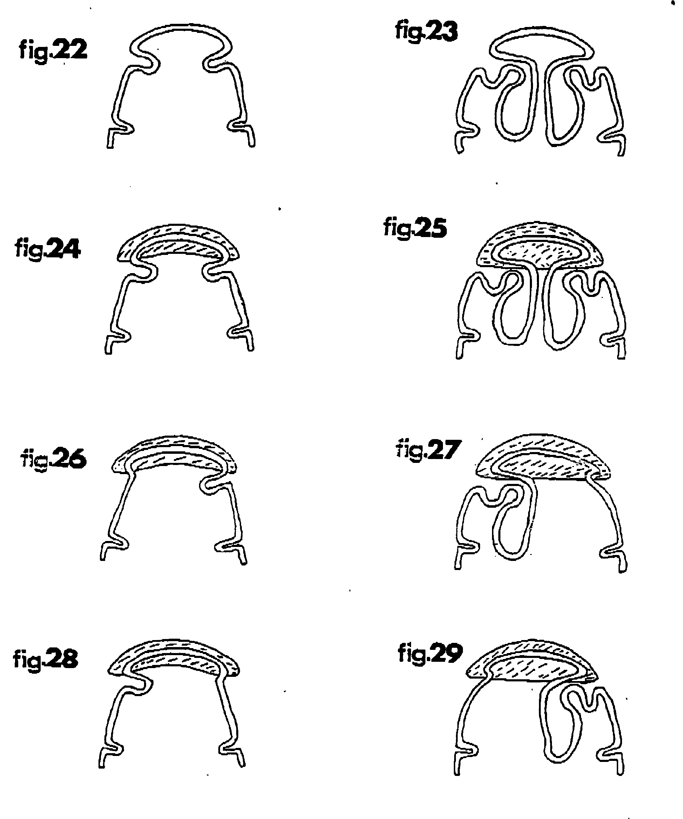

Fig.22: PD lingual arch with two shutters;
Fig.23: PD palatine arch with four shutters;
Fig.24: PD lingual arch with two shutters and with resin;
Fig.25: PD palatine arch with four shutters and with resin;
Fig.26: Right unsymmetrical PD lingual arch with one shutter and with resin;
Fig.27: Right unsymmetrical PD palatine arch with two shutters and with resin;

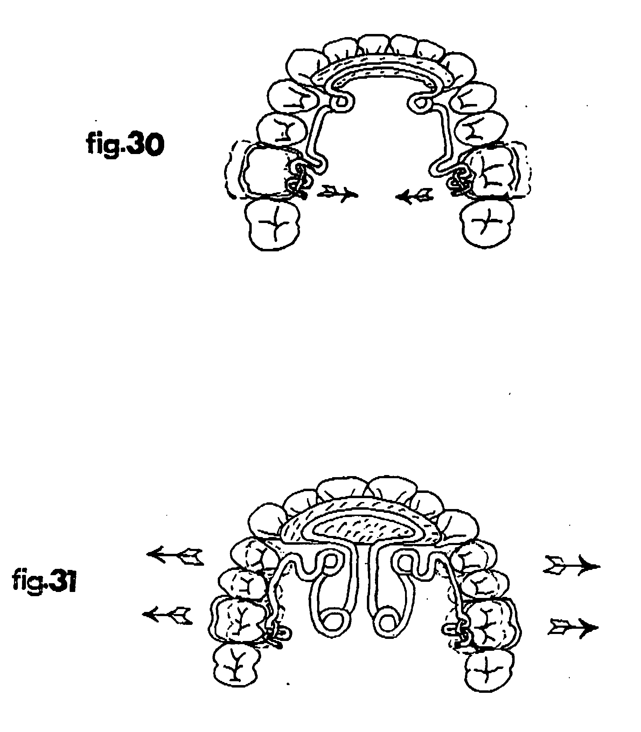

Fig.28: Left unsymmetrical PD lingual arch with one shutter and with resin;
Fig.29: Left unsymmetrical PD palatine arch with two shutters and with resin.
   The **5/5** sheet includes 2 figures, showing the planned dental movement by PD arches and by UVHs soldered on the molar bands.
   The arrows stand for the verse of the dental movement, while the outlines stand for the previous dental position.
Fig.30: Application on the lower dental arch of PD lingual arch, with UVHs, and with and aimed and planned expansion;
Fig.31: Application on the upper dental arch of PD palatine arch, with UVHs, and with an aimed and planned expansion.

### BEST MODE FOR CARRYING OUT THE INVENTION.

The aim of the Universal Vertical Hinge is that to reach a major stability compare with other hinges totally avoiding the swinging of the orthodontic devices, that the hinge is meant to hold.

The UVH shape guarantees:
- Total Anchorage, with the possibility of vertical disconnection of the PD orthodontic devices held in it.
- Convenience in using it, because of the great stability of the orthodontic devices held in it, and because of the convenient disconnection of the orthodontic devices from the bands.

The aim of PD arches is that to get the control of the inter-molar diameter, that is transversal, of the dental arches, through a planned expansion movement by a technical Set-up support which guarantees to plan the searched dental movement, respecting the Total Anchorage principle. Said Total Anchorage of the PD arches to the bands is granted by the use of the UVH. The anchorage of the Arches is granted by folding the two malleable arresting flaps of UVH (see fig.9;12.).

The results have pointed out interesting advantages, comparing with common brackets, hinges and common arches, already used in Orthodontontics. The main results are: the planned control of the orthodontic expansion of the dental arches, by an aimed and planned dental movement; an improvement in the Anchorage principle and in the stability of the orthodontic devices, thus guaranteeing a great precision of the device and of the management times.

### INDUSTRIAL APPLICABILITY.

The Universal Vertical Hinge with its original shape and the PD arches can be manufactured without changing their typical features; obviously ,during their application they are adjusted according to the different therapeutic individual needs.

For this reason the Orthodontic Programmed PD System (UVH and PD arches), can be proposed to the whole industrial production, according the dictates foreseen by law.

## Claims

1. Orthodontic system comprising an Universal Vertical Hinge (UVH) made of malleable steel to be soldered on an orthodontic band, the UVH is composed by an horizontal ground body (3,5) and two vertical malleable arresting flaps(1,2); the ground body (3,5) has got a swelling (4) in its centre for the vertical insertion of the final part of the PD arch, called vertical bayonet; said two vertical malleable arresting flaps (1,2) for holding the PD arch, can be straightened and re-folded several times so the PD arch can be removed in a vertical way.

2. Orthodontic system according to claim 1 further comprising a molar band, said Universal Vertical Hinge (UVH) being directly soldered on said band.

3. Orthodontic system according to claim 2 comprising further a PD lingual and/or PD palatine Arches made from orthodontic steel wire, said PD Arches having a final part shape with a double folding of the wire, called bayonet, which is insertable directly into said UVH.

## Patentansprüche

1. Orthodoxtisches System, das einschließt ein vertikales allgemeinhinscharnier (UVH), gebildet vom formbaren auf ein orthodeontisches Band gelotet zu werden Stahl, das UVH besteht durch einen horizontalen Grundkörper (3,5) und 2 Formbarenarretierklappen (1,2); der Grundkörper hat einen Schwellung (4) in seiner Mitte für die vertikale Einfugung des abschließende Teils des PD Bogens, benanntes vertikales bajonet; die Formbarenarretierklappen (1,2), für das Halten des Bogens, können geradegerichtet und zuruckgenommen werden mehrmals, also kann der Bogen in einer vertikalen Weise entfernt werden.

2. entsprechend dem Anspruch 1 ein molares Band weiter enthalten, sagte UVH das direkt auf besagtes Band gelotet wurde.

3. entsprechend dem Anspruch 2 einen zunge und/oder pfalzbogen weiter enthalten gebildet von der orthodeontischen Stahlleitung, besagte Bogen, die eine abschließende Teilform mit einer doppelten Falte der Leitung, genannt bajonet, das direkt in besagtes UVH einfugbar ist.

## Revendications

1. Système orthodontique comportant une charnière verticale universelle (UVH) faite d'acier mallèable à souder sur une bande orthodontique, la UVH se compose par un corps au sol horizontal (3,5) et 2 volets d'arret mallèables (1,2); le corps au sol (3,5) a un gonflement (4) à son centre pour l'insertion verticale de la partie finale de la voùte PD, appelè bajonet verticale ; les 2 volets d'arret mallèables (1,2), pour tenir la voùte PD, peuvent ètre redressès et pliè plusieurs fois ainsi la voùte peut ètre enlevèe d'une manière verticale.

2. Système orthodontique selon comportant en outre de la revendication 1 une bande molaire, ladite charnière verticale universelle (UVH) ètant directement soudèe sur ladite bande.

3. Système orthodontique selon comportant en outre de la revendication 2 voùtes PD lingual de/or palatal, à partir du fil d'acier orthodontique, lesdites voùtes PD ayant une forme finale de partie avec un double pliage du fil, appelè bajonet, qui est insèrable directemennt dans ledit UVH.
